# FASCICULE DE BREVET EUROPEEN

(11) **EP 2 726 660 B1**
(45) Date de publication et mention de la délivrance du brevet: **08.07.2015**
(21) Numéro de dépôt: 12745549.1
(22) Date de dépôt: 27.06.2012
(51) Int. Cl.: D04H 1/48, B29C 70/00, D04H 1/485, D04H 1/4218, D04H 1/4374, D04H 1/413

(54) **NAPPE THERMOFORMABLE A FIBRES DE RENFORT**
THERMOFORMBARES TUCH MIT VERSTÄRKUNGSFASERN
THERMOFORMABLE LAP HAVING REINFORCEMENT FIBRES

(30) Priorité: 28.06.2011 FR 1155776
(43) Date de publication de la demande: 07.05.2014
(73) Titulaire: Chomarat, Gilbert, 1223 Cologny (CH)
(72) Inventeur: Chomarat, Gilbert, 1223 Cologny (CH)
(74) Mandataire: Poncet, Jean-François
(86) Numéro de dépôt international: PCT/IB2012/053253
(87) Numéro de publication internationale: WO 2013/001468

(56) Documents cités:
- EP-A1- 0 665 316
- EP-A1- 1 408 152
- EP-A1- 1 857 261
- WO-A2-2011/021134
- FR-A1- 2 548 084
- US-A- 3 863 758

## Description

### DOMAINE TECHNIQUE DE L'INVENTION

La présente invention concerne les nappes thermoformables à base de fibres de renfort et de matériau thermofusible ou thermoréactivable, que l'on peut utiliser pour réaliser des pièces en matériau composite par pressage à chaud.

On connaît du document US 3,863,758 A une nappe à base de fibres de verre et de poudre de polymère thermoplastique, que l'on peut mouler à chaud. Les fibres de verre et la poudre de polymère thermoplastique sont mélangées et encapsulées entre deux couches extérieures dont les bords sont scellés et qui s'opposent à l'échappement des fibres de verre et de la poudre. Les couches extérieures sont des films de polymère thermoplastique compatible avec la poudre de polymère thermoplastique. Mais un premier inconvénient est que la production elle-même du matériau thermoplastique en poudre est relativement onéreuse. Un deuxième inconvénient est que de telles nappes connues à poudre fine sont sensibles au vieillissement, et nécessitent des conditions de stockage particulières et contraignantes (courte durée, basse température, absence de rayons ultraviolets ...). Un troisième inconvénient est que la nappe ne peut être découpée que selon des lignes de liaison préformées selon lesquelles les couches extérieures sont scellées l'une à l'autre.

Du document EP 1 408 152 A1 on connaît une nappe à base de faisceaux de fibres de verre parallèles reliés par des fils de trame, le tissu ainsi formé ayant des zones recouvertes d'une résine adhérente.

Du document FR 2 548 084 A1, on connaît une nappe constituée de mèches de fibres continues chargées électrostatiquement de grains de poudre d'une matière thermoplastique. Les mèches sont ensuite recouvertes d'une couche de matière plastique formant un gainage extérieur s'opposant à l'échappement de la poudre.

### EXPOSE DE L'INVENTION

Le problème proposé par la présente invention est de concevoir une nouvelle structure de nappe thermoformable à fibres de renfort et matériau thermoréactivable, qui soit stable au stockage, qui puisse être produite à moindre coût et à grande cadence, tout en présentant de bonnes propriétés pour la réalisation de pièces moulées satisfaisantes, en pouvant notamment être ultérieurement découpée en n'importe quelle taille, suivant les besoins, sans laisser échapper le matériau thermoréactivable.

Une première idée qui est à la base de l'invention est de concevoir une telle nappe thermoformable qui puisse être réalisée à base d'un matériau thermoréactivable disponible à moindre coût tel que des granules de matériau thermoréactivable.

Une seconde idée qui est à la base de l'invention et de concevoir d'autres moyens pour assurer la cohésion du matériau thermoréactivable avec les fibres de verre et avec les couches extérieures.

Pour atteindre ces buts ainsi que d'autres, l'invention propose une nappe thermoformable à base de fibres de renfort liées à un matériau thermoréactivable, comprenant :
- un premier voile et un second voile en fibres de liaison dont au moins la surface est en un premier matériau thermoréactivable ayant une première température de réactivation,
- une couche intermédiaire disposée entre les premier et second voiles,
- la couche intermédiaire ayant des fibres de renfort et des granules d'un second matériau thermoréactivable ayant une seconde température de réactivation supérieure à la première température de réactivation,
- certains tronçons au moins de fibres de liaison des premier et second voiles pénétrant dans la couche intermédiaire et adhérant partiellement entre eux et aux fibres de renfort de la couche intermédiaire, pour lier les premier et second voiles à la couche intermédiaire.

L'-utilisation du second matériau thermoréactivable en forme de granules permet de réduire très sensiblement le coût de production de la nappe thermoformable. La nappe thermoformable ainsi constituée présente une faible sensibilité au vieillissement, de sorte que le coût du stockage est réduit. Cette utilisation d'un matériau en forme de granules est rendue possible par la présence des premier et second voiles en fibres de liaison, qui enferment les matériaux constituant la couche intermédiaire et évitent que les granules s'échappent pendant la manutention de la nappe thermoformable. Simultanément les tronçons pénétrants de fibres de liaison, qui adhèrent partiellement entre eux et aux fibres de renfort de la couche intermédiaire, assurent la cohésion de l'ensemble, permettent la manipulation de la nappe thermoformable depuis son lieu de production jusqu'au lieu d'utilisation pour formage d'une pièce définitive, et permettent une découpe ultérieure de la nappe en n'importe quelle taille, suivant les besoins, en s'opposant de façon efficace à l'échappement des granules.

La présence des premier et second voiles en fibres de liaison permet également d'utiliser des fibres de renfort sous forme non tissée, les voiles évitant l'échappement des fibres de renfort lors de la manipulation de la nappe thermoformable. On évite ainsi le recours à un métier à tisser.

Dans la description qui suit et dans les revendications, l'expression « granules » désigne tous types de grains de matériau pouvant avoir diverses formes, rondes ou anguleuses, et une taille d'une fraction de millimètre à quelques millimètres. De tels granules sont couramment disponibles dans le commerce pour des matériaux thermoréactivables, notamment des matériaux de type polyamide. Ils sont généralement appelés « granulés plastiques », sont utilisés notamment pour le moulage par injection, et sont obtenus par extrusion au travers d'une filière à trous, puis par tronçonnage des cordons obtenus refroidis.

L'expression « thermoréactivable » signifie que le matériau, après constitution de la nappe, peut être ultérieurement fluidisé pour se répartir et adhérer aux fibres de verre.

Un premier exemple est un matériau thermodurcissable de type époxyde, qui peut être polymérisé partiellement pour être sous forme solide à température ambiante. Ce matériau est à l'état solide à température ambiante. Par élévation de température, on peut abaisser temporairement sa viscosité, et il est alors suffisamment fluidifié pour se répartir entre les fibres de verre, avant de durcir par polymérisation.

Un second exemple est un matériau thermoplastique, dont on peut baisser la viscosité chaque fois qu'on élève sa température.

Ainsi, l'expression « thermoréactivable » couvre les matières plastiques thermofusibles, mais aussi les autres résines que l'on peut fluidifier au moins une fois par la chaleur, par exemple les résines epoxy.

Les fibres de renfort peuvent avantageusement être des fibres de verre. On bénéficie ainsi des bonnes propriétés de renfort procurées par la fibre de verre.

Dans les fibres de liaison, le premier matériau thermoréactivable peut être par exemple un polyamide/copolyamide (PA6/CoPA), un polyéthylène, un copolypropylène, un acrylique, ou de l'acétate d'éthyl de vinyle. La première température de réactivation (en l'espèce la température de fusion) d'un tel matériau est de l'ordre de 110°C à 150°C.

Les fibres de liaison peuvent être constituées d'un seul premier matériau thermoréactivable, ou peuvent être constituées en alternative d'une âme centrale en polyamide, polyester ou polypropylène et d'une gaine externe en un premier matériau thermoréactivable dont la première température de réactivation est inférieure à celle de l'âme centrale.

Selon un mode de réalisation avantageux, le second matériau thermoréactivable en granules peut être un polyamide.

Les fibres de liaison peuvent être des tronçons de fibres, avantageusement des tronçons dont la longueur est de 30 à 75 millimètres environ.

Selon un premier mode de réalisation, dans la couche intermédiaire, les fibres de renfort peuvent être des tronçons de fibres de renfort mélangés aux granules de second matériau thermoréactivable. La réalisation est ainsi simple, la couche intermédiaire pouvant être constituée en une seule étape.

Selon un second mode de réalisation, la couche intermédiaire peut être stratifiée en couches de fibres de renfort et couches de granules de second matériau thermoréactivable. Ce second mode de réalisation a l'avantage de pouvoir utiliser des fibres de renfort longues, dont la disposition peut être assurée en continu par couches successives.

Selon un autre aspect, l'invention propose un procédé de fabrication d'une nappe thermoformable telle que définie ci-dessus, comprenant les étapes de :
a) sur un support, déposer un premier voile en fibres de liaison,
b) déposer, sur le premier voile, des fibres de renfort et des granules de second matériau thermoréactivable, constituant une couche intermédiaire,
c) déposer, sur la couche intermédiaire, un second voile en fibres de liaison,
d) effectuer un aiguilletage pour faire pénétrer des tronçons de fibres de liaison des premier et second voiles dans la couche intermédiaire,
e) chauffer l'ensemble à une température suffisante pour ramollir et rendre collantes les fibres de liaison, sans réactiver les granules de second matériau thermoréactivable,
f) calandrer à froid l'ensemble.

L'aiguilletage fait pénétrer des tronçons de fibres de liaison dans la couche intermédiaire. Lors du chauffage ultérieur, les fibres de liaison sont rendues collantes et leurs tronçons pénétrants peuvent adhérer aux fibres de renfort et aux granules de la couche intermédiaire. Les matériaux de la couche intermédiaire, qui présentent une température de réactivation plus élevée, ne sont pas affectés par l'opération de chauffage et de ramollissement des fibres de liaison, et conservent leurs propriétés. Lors du calandrage à froid, les fibres de liaison sont à nouveau solidifiées mais leurs tronçons pénétrants restent collés aux fibres de renfort et aux granules, assurant la cohésion de l'ensemble.

L'invention peut trouver avantageusement des applications dans la réalisation de pièces par thermoformage d'une nappe ainsi constituée.

Il suffit alors de placer la nappe dans un moule de pressage à chaud, qui va élever la température de la nappe à une valeur suffisante pour provoquer non seulement la réactivation des fibres de liaison, mais également la réactivation des granules de second matériau thermoréactivable. Le second matériau thermoréactivable constitue alors une résine qui enrobe les fibres de renfort et qui, après refroidissement, devient solide et donne à la pièce sa forme définitive.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue schématique en coupe longitudinale d'une nappe thermoformable selon un premier mode de réalisation de la présente invention ;
- la figure 2 est une vue schématique en coupe longitudinale d'une nappe thermoformable selon un second mode de réalisation de la présente invention ; et
- la figure 3 illustre schématiquement en coupe longitudinale une nappe thermoformable de la figure 2 en cours d'aiguilletage.

### DESCRIPTION DES MODES DE REALISATION PREFERES

Comme illustré sur les figures, une nappe thermoformable 1 selon la présente invention comprend une couche intermédiaire 2 disposée entre un premier voile 3 et un second voile 4.

La couche intermédiaire 2 comprend des fibres de renfort 2a et des granules 2b d'un second matériau thermoréactivable.

Le premier voile 3 et le second voile 4 sont constitués de fibres de liaison respectivement 3a et 4a dont au moins la surface est en un premier matériau thermoréactivable.

Le premier matériau thermoréactivable constituant les fibres de liaison 3a et 4a a une première température de réactivation T1 de l'ordre de 110°C à 135°C.

Le second matériau thermoréactivable en forme de granules 2b a une seconde température de réactivation T2 qui est supérieure à la première température de réactivation T1.

Des tronçons 3b et 4b de certaines fibres de liaison des premier et second voiles 3 et 4 pénètrent dans la couche intermédiaire 2 et adhèrent partiellement entre eux et aux fibres de renfort 2a de la couche intermédiaire 2.

Les fibres de renfort 2a peuvent être en tous matériaux procurant des propriétés mécaniques satisfaisantes de renfort pour les pièces définitives réalisées à l'aide de la nappe thermoformable 1 selon l'invention.

Par exemple, les fibres de renfort 2a peuvent être des fibres de verre, des fibres de carbone, des fibres végétales.

Les fibres de liaison 3a et 4a peuvent être en toute matière ayant une température de réactivation suffisamment basse et de bonnes propriétés de collage. Elles peuvent être constituées d'un seul premier matériau thermoréactivable, par exemple le polyamide/copolyamide (PA6/CoPA), le polyéthylène, un copolypropylène, l'acétate d'éthyl de vinyle. La température de fusion de tels matériaux est de l'ordre de 110°C à 150°C, et ces matériaux présentent de bonnes propriétés de collage. Les fibres de liaison doivent en outre être compatibles avec le second matériau thermoréactivable des granules 2b : températures de réactivation voisines, capacité de se combiner lors de la réactivation.

En alternative, les fibres de liaison 3a, 4a peuvent être des fibres chimiques bicomposant, comportant une âme centrale en polyamide, polyester, ou polypropylène, et une gaine externe en copolyamide, en copolypropylène, en copolyester, en polyéthylène, en acétate d'éthyle vinyle, ou en toute autre matière ayant une température de réactivation inférieure à celle de l'âme centrale. De bons résultats pourront être obtenus en utilisant une âme centrale en polyester et une gaine externe en copolypropylène, ou une âme centrale en polypropylène et une gaine externe en polyéthylène.

Par le fait que l'âme centrale de la fibre de liaison bicomposant a une température de réactivation plus élevée que la gaine externe, on évite un risque accidentel de fusion complète des fibres de liaison 3a et 4a lors de la fabrication de la nappe thermoformable 1.

On limite aussi efficacement le risque, lors d'une étape d'échauffement pour la fabrication de la nappe thermoformable 1, que les tronçons de fibre de liaison soient, par un échauffement trop élevé ou mal contrôlé, complètement fondus, formant des couches uniformes ou imperméables et qui n'adhèrent pas efficacement à la couche intermédiaire 2 après fabrication de la pièce définitive. L'âme des fibres bicomposant n'est pas (ou très peu) altérée par l'échauffement, et les propriétés de liaison des fibres de liaison 3a et 4a sont ainsi conservées.

Les tronçons pénétrants 3b et 4b de fibre de liaison sont répartis régulièrement selon la surface de la nappe thermoformable 1, par exemple selon une densité surfacique de 5 à 50 tronçons pénétrants par centimètre carré de nappe thermoformable 1, et assurent une cohésion de l'ensemble, tout en conservant les propriétés de déformabilité et de souplesse de la nappe thermoformable 1.

Le second matériau thermoréactivable en forme de granules 2b est avantageusement un polyamide. Un tel matériau constitue une résine dont la température de réactivation est nettement supérieure à la première température de réactivation des fibres de liaison 3a et 4a, par exemple de l'ordre de 240°C à 280°C. De la sorte, dans la nappe thermoformable 1 avant utilisation pour réalisation d'une pièce définitive, le second matériau thermoréactivable reste sous forme de granules 2b, simplement juxtaposés aux fibres de renfort 2a, et enfermés par les voiles 3 et 4.

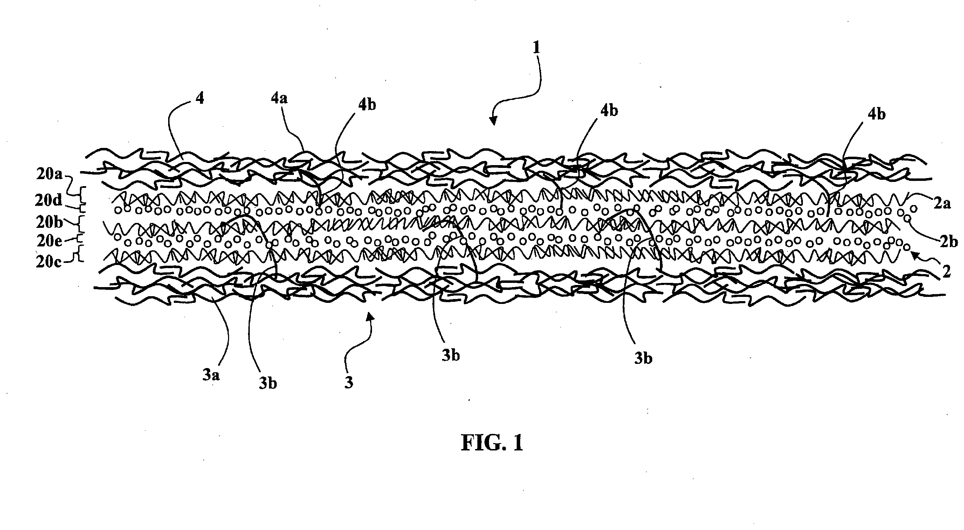

Dans le mode de réalisation illustré sur la figure 1, la couche intermédiaire 2 est stratifiée en plusieurs couches de fibres de renfort 20a, 20b et 20c, et plusieurs couches de granules en second matériau thermoréactivable 20d et 20e. Une variante avantageuse consiste à supprimer la couche centrale 20b.

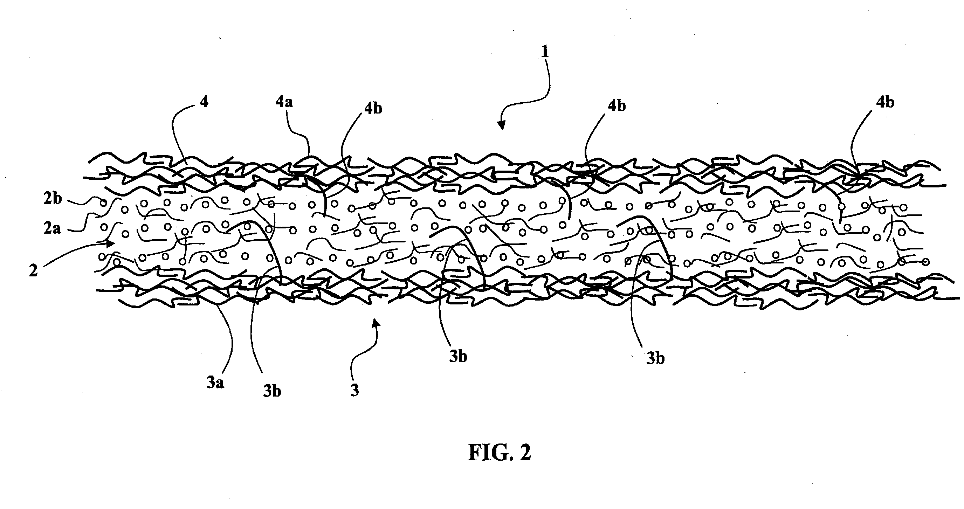

Dans le mode de réalisation illustré sur la figure 2, dans la couche intermédiaire 2, les fibres de renfort sont des tronçons de fibres de renfort 2a mélangés aux granules 2b de matériau thermoréactivable, formant une couche généralement homogène dans laquelle sont régulièrement répartis les tronçons de fibres de renfort 2a et les granules 2b.

La nappe thermoformable 1 selon l'invention peut être réalisée sous forme de bande continue que l'on conditionne en bobine de grande longueur. Les bobines peuvent également avoir une grande largeur. La nappe thermoformable ainsi produite peut être découpée en longueur et en largeur à volonté, pour être reconditionnée ou thermoformée.

Dans le mode de réalisation illustré sur la figure 1, dans lequel la couche intermédiaire 2 est stratifiée, les fibres de renfort peuvent être des fibres de verre continues, ou des tronçons de fibre de verre coupés en vrac à toutes orientations.

Dans le second mode de réalisation illustré sur la figure 2, les fibres de renfort doivent de préférence être des tronçons de fibre, par exemple de 50 à 150 millimètres environ, en vrac à toutes orientations, et mélangés aux granules 2b.

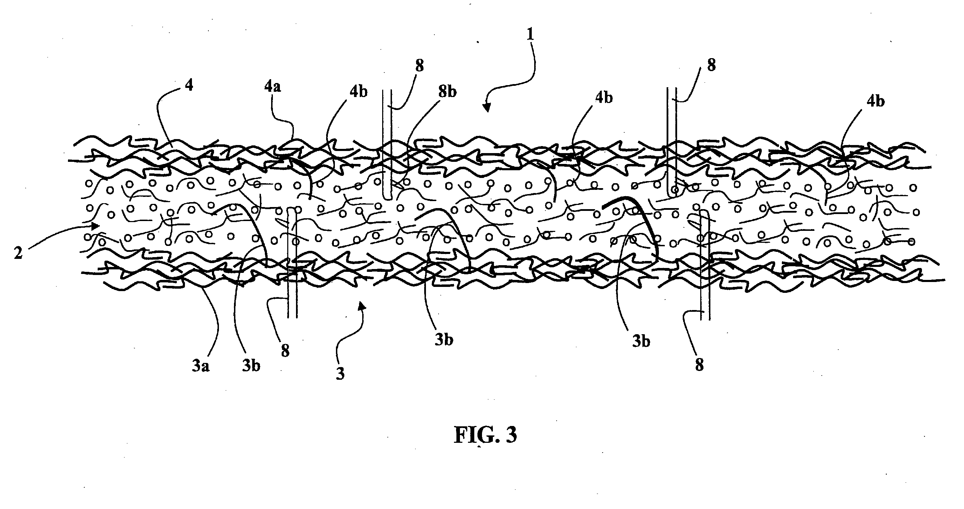

Pour la fabrication d'une telle nappe thermoformable 1, on peut utiliser le procédé suivant :
a) sur un support, on dépose le premier voile 3 en fibres de liaison 3a ; les fibres de liaison peuvent être des tronçons de fibre en premier matériau thermoréactivable ; le voile peut être réalisé sur une carde conventionnelle, et déposé en continu sur le support lui-même en déplacement longitudinal ;
b) sur le premier voile 3, on dépose des fibres de renfort 2a et des granules 2b de second matériau thermoréactivable, pour constituer la couche intermédiaire 2 ; pour la réalisation de la nappe du mode de réalisation de la figure 2, le dépôt des fibres de renfort 2a et des granules 2b s'effectue par gravité en continu et en mélange, en laissant tomber un mélange de fibres de renfort 2a et de granules 2b sur le premier voile 3, lors de l'avance du premier voile 3 porté par le support ;
c) sur la couche intermédiaire 2 ainsi formée, on dépose un second voile 4 en fibres de liaison 4a ; ce second voile 4 peut également être réalisé à l'aide d'une carde conventionnelle ; le dépôt du second voile s'effectue en continu pendant l'avance de l'ensemble du premier voile 3 et de la couche intermédiaire 2 ;
d) en aval, on effectue un aiguilletage par pénétration d'aiguilles depuis la face supérieure et la face inférieure de l'ensemble, ce qui fait pénétrer des tronçons de fibre de liaison 3b et 4b des premier et second voiles 3 et 4 dans la couche intermédiaire 2 ; la figure 3 illustre cette étape, et l'on distingue des aiguilles 8 qui comportent des barbes 8b d'entraînement ;
e) on chauffe ensuite l'ensemble à une température suffisante pour ramollir et rendre collantes les fibres de liaison 3a et 4a, en particulier les tronçons pénétrants 3b et 4b de fibre de liaison qui pénètrent dans la couche intermédiaire 2 ; la température doit être inférieure à la température de réactivation des granules 2b de second matériau thermoréactivable ;
f) enfin, on calandre à froid l'ensemble ainsi constitué, pour solidifier à nouveau les fibres de liaison 3a, 4a, 3b, 4b.

### Exemple

I) Sur un support plan en déplacement longitudinal continu, on dépose en continu un premier voile 3 de tronçons de fibres de liaison 3a en polyamide ayant un titre unitaire compris entre 2 deniers environ et 4 deniers environ, le voile sortant d'une carde conventionnelle.
II) Sur le premier voile 3 en déplacement longitudinal continu, on fait tomber un mélange de fibres de renfort 2a et de granules 2b pour constituer une couche intermédiaire 2 ; les fibres de renfort 2a sont des tronçons de fibre de verre ayant un titre unitaire d'environ 30 tex à 100 tex et une longueur d'environ 50 à 150 millimètres, en toutes orientations; les granules ont une taille d'environ 2 millimètres et sont en un polyamide de type 6x6, ayant une température de réactivation d'environ 240°C à 280°C.
III) Pendant l'avance continue longitudinale de l'ensemble formé par le premier voile 3 et la couche intermédiaire 2, on dépose en continu le second voile 4 en fibres de liaison 4a, lesdites fibres de liaison 4a étant des tronçons de fibre en polyamide ayant un titre unitaire compris entre 2 deniers environ et 4 deniers environ, le voile sortant d'une carde conventionnelle.
IV) L'ébauche de nappe thermoformable 1 ainsi réalisée est introduite au moyen d'un tapis transporteur dans une aiguilleteuse ; la densité des aiguilles 8 est de 10 par centimètre carré ; la profondeur de pénétration des aiguilles 8 est de 12 millimètres, que l'on choisit en fonction de l'épaisseur de la nappe à réaliser ; la vitesse de défilement du tapis est de 8 à 15 mètres par minute.
V) Après l'opération d'aiguilletage, l'ébauche de nappe thermoformable 1 est introduite dans un four à air traversant comportant une partie chauffante de 12 mètres de longueur et une vitesse de défilement de 8 à 15 mètres par minute ; la température du four à air traversant est d'environ 120°C, correspondant à la température de ramollissement des fibres de liaison 3a et 4a.
VI) En sortie du four à air traversant, on procède à un calandrage à froid qui donne à la nappe thermoformable 1 son épaisseur finale qui est voisine de 4 à 10 millimètres.

Le grammage de la nappe thermoformable 1 ainsi réalisée est compris entre 800 et 1 800 grammes au mètre carré, contenant de 200 à 1 000 grammes au mètre carré de fibres de renfort, et de 200 à 1 000 grammes au mètre carré de granules 2b de second matériau thermoréactivable.

La nappe thermoformable 1 selon l'invention peut trouver des applications avantageuses dans la fabrication de pièces composites de formes diverses, par thermoformage de la nappe 1.

La pièce est mise en forme par introduction de la nappe thermoformable 1 dans un moule chauffant, qui porte la température de la nappe à une valeur supérieure à la température T2 de réactivation des granules de second matériau thermoréactivable. Le second matériau thermoréactivable devient alors fluide et diffuse entre les fibres de renfort 2a pour donner ensuite à la pièce sa forme définitive après refroidissement ou polymérisation.

La présente invention n'est pas limitée aux modes de réalisation qui ont été explicitement décrits, mais elle en inclut les diverses variantes et généralisations contenues dans le domaine des revendications ci-après.

## Revendications

1. Nappe thermoformable (1) à base de fibres de renfort liées à un matériau thermoréactivable, comprenant :
- une première couche extérieure et une seconde couche extérieure, ayant un premier matériau thermoréactivable à une première température de réactivation,
- une couche intermédiaire (2) disposée entre les première et seconde couches extérieures,
- la couche intermédiaire (2) ayant des fibres de renfort (2a) et un second matériau thermoréactivable à une seconde température de réactivation supérieure à la première température de réactivation,
**caractérisée en ce que** :
- le second matériau thermoréactivable est sous forme de granules (2b),
- les couches extérieures sont constituées d'un premier voile (3) et d'un second voile (4) en fibres de liaison (3a, 4a) dont au moins la surface est en premier matériau thermoréactivable ayant une première température de réactivation,
- certains tronçons (3b, 4b) au moins de fibres de liaison des premier et second voiles (3, 4) pénètrent dans la couche intermédiaire (2) et adhèrent partiellement entre eux et aux fibres de renfort (2a) de la couche intermédiaire (2).

2. Nappe thermoformable (1) à base de fibres de renfort (2a) selon la revendication 1, **caractérisée en ce que** les fibres de renfort (2a) sont des fibres de verre.

3. Nappe thermoformable (1) à base de fibres de renfort selon l'une des revendications 1 ou 2, **caractérisée en ce que** le premier matériau thermoréactivable est un polyamide/copolyamide (PA6/CoPA), un polyéthylène, un copolypropylène, un acrylique ou de l'acétate d'éthyl de vinyle.

4. Nappe thermoformable (1) à base de fibres de renfort selon l'une quelconque des revendications 1 à 3, **caractérisée en ce que** les fibres de liaison (3a, 4a) sont constituées d'un seul premier matériau thermoréactivable.

5. Nappe thermoformable (1) à base de fibres de renfort selon l'une quelconque des revendications 1 à 3, **caractérisée en ce que** les fibres de liaison (3a, 4a) sont constituées d'une âme centrale en polyamide, polyester ou polypropylène et d'une gaine externe en premier matériau thermoréactivable dont la première température de réactivation est inférieure à celle de l'âme centrale.

6. Nappe thermoformable (1) à base de fibres de renfort selon l'une quelconque des revendications 1 à 5, **caractérisée en ce que** le second matériau thermoréactivable en granules (2b) est un polyamide.

7. Nappe thermoformable (1) à base de fibres de renfort selon l'une quelconque des revendications 1 à 6, **caractérisée en ce que** les fibres de liaison (3a, 4a) sont des tronçons de fibres.

8. Nappe thermoformable (1) à base de fibres de renfort selon l'une quelconque des revendications 1 à 7, **caractérisée en ce que**, dans la couche intermédiaire (2), les fibres de renfort (2a) sont des tronçons de fibres de renfort (2a) mélangés aux granules (2b) de second matériau thermoréactivable.

9. Nappe thermoformable (1) à base de fibres de renfort selon l'une quelconque des revendications 1 à 7, **caractérisée en ce que** la couche intermédiaire (2) est stratifiée en couches de fibres de renfort (20a, 20b, 20c) et couches de granules de second matériau thermoréactivable (20d, 20e).

10. Nappe thermoformable (1) à base de fibres de renfort selon l'une quelconque des revendications 1 à 9, **caractérisée en ce qu'**elle contient de 200 à 1 000 grammes au mètre carré de fibres de renfort (2a), et de 200 à 1 000 grammes au mètre carré de granules (2b) de second matériau thermoréactivable.

11. Nappe thermoformable (1) à base de fibres de renfort selon l'une quelconque des revendications 1 à 10, **caractérisée en ce qu'**elle est en forme de bande continue conditionnée en bobine.

12. Procédé de fabrication d'une nappe thermoformable (1) selon l'une quelconque des revendications 1 à 11, comprenant les étapes de :
a) sur un support, déposer un premier voile (3) en fibres de liaison (3a),
b) déposer, sur le premier voile (3), des fibres de renfort (2a) et des granules (2b) de second matériau thermoréactivable, constituant une couche intermédiaire (2),
c) déposer, sur la couche intermédiaire (2), un second voile (4) en fibres de liaison (4a),
d) effectuer un aiguilletage pour faire pénétrer des tronçons de fibres de liaison (3b, 4b) des premier et second voiles (3, 4) dans la couche intermédiaire (2),
e) chauffer l'ensemble à une température suffisante pour ramollir et rendre collantes les fibres de liaison (3a, 4a, 3b, 4b),
f) calandrer à froid l'ensemble.

13. Application d'une nappe thermoformable (1) selon l'une quelconque des revendications 1 à 11 à la réalisation de pièces par thermoformage de la nappe.

## Patentansprüche

1. Thermoformbare Einlage (1) basierend auf Verstärkungsfasern, die mit einem thermoreaktivierbaren Material verbunden sind, umfassend:
- eine erste äußere Schicht und eine zweite äußere Schicht, die ein erstes thermoreaktivierbares Material mit einer ersten Reaktivierungstemperatur aufweisen,
- eine Zwischenschicht (2), die zwischen der ersten und zweiten äußeren Schicht angeordnet ist,
- wobei die Zwischenschicht (2) Verstärkungsfasern (2a) und ein zweites thermoreaktivierbares Material mit einer zweiten Reaktivierungstemperatur oberhalb der ersten Reaktivierungstemperatur aufweist,
**dadurch gekennzeichnet, dass**:
- das zweite thermoreaktivierbare Material als Granulat (2b) ausgebildet ist,
- die äußeren Schichten aus einem ersten Gewebe (3) und einem zweiten Gewebe (4), hergestellt aus Verbindungsfasern (3a, 4a), bestehen, von denen wenigstens die Oberfläche aus dem ersten thermoreaktivierbaren Material besteht, das eine erste Reaktivierungstemperatur aufweist,
- bestimmte Bereiche (3b, 4b) mindestens mit Verbindungsfasern des ersten und zweiten Gewebes (3, 4) in die Zwischenschicht (2) eindringen und teilweise aneinander und an den Verstärkungsfasern (2a) der Zwischenschicht (2) haften.

2. Thermoformbare Einlage (1) basierend auf Verstärkungsfasern (2a) nach Anspruch 1, **dadurch gekennzeichnet, dass** die Verstärkungsfasern (2a) Glasfasern sind.

3. Thermoformbare Einlage (1) basierend auf Verstärkungsfasern nach Anspruch 1 oder 2, **dadurch gekennzeichnet, dass** das erste thermoreaktivierbare Material ein Polyamid/Copolyamid (PA6/CoPA), ein Polyethylen, ein Copolypropylen, ein Acryl oder ein Ethylenvinylacetat ist.

4. Thermoformbare Einlage (1) basierend auf Verstärkungsfasern nach einem der Ansprüche 1 bis 3, **dadurch gekennzeichnet, dass** die Verbindungsfasern (3a, 4a) aus einem einzigen ersten thermoreaktivierbarem Material bestehen.

5. Thermoformbare Einlage (1) basierend auf Verstärkungsfasern nach einem der Ansprüche 1 bis 3, **dadurch gekennzeichnet, dass** die Verbindungsfasern (3a, 4a) aus einem inneren Kern aus Polyamid, Polyester oder Polypropylen und einer äußeren Hülle aus dem ersten thermoreaktivierbaren Material bestehen, wobei die erste Reaktivierungstemperatur kleiner ist, als die des inneren Kerns.

6. Thermoformbare Einlage (1) basierend auf Verstärkungsfasern nach einem der Ansprüche 1 bis 5, **dadurch gekennzeichnet, dass** das zweite thermoreaktivierbare Material aus Granulat (2b) ein Polyamid ist.

7. Thermoformbare Einlage (1) basierend auf Verstärkungsfasern nach einem der Ansprüche 1 bis 6, **dadurch gekennzeichnet, dass** die Verbindungsfasern (3a, 4a) Faserabschnitte sind.

8. Thermoformbare Einlage (1) basierend auf Verstärkungsfasern nach einem der Ansprüche 1 bis 7, **dadurch gekennzeichnet, dass** in der Zwischenschicht (2) die Verstärkungsfasern (2a) Abschnitte von Verstärkungsfasern (2a) sind, die mit dem Granulat (2b) des zweiten thermoreaktivierbaren Materials gemischt sind.

9. Thermoformbare Einlage (1) basierend auf Verstärkungsfasern nach einem der Ansprüche 1 bis 7, **dadurch gekennzeichnet, dass** die Zwischenschicht (2) in Schichten aus Verstärkungsfasern (20a, 20b, 20c) und Schichten aus Granulat des zweiten thermoreaktivierbaren Materials (20d, 20e) geschichtet ist.

10. Thermoformbare Einlage (1) basierend auf Verstärkungsfasern nach einem der Ansprüche 1 bis 9, **dadurch gekennzeichnet, dass** sie von 200 bis 1000 Gramm pro Quadratmeter an Verstärkungsfasern (2a) und von 200 bis 1000 Gramm pro Quadratmeter an Granulat (2b) aus zweitem thermoaktivierbaren Material enthält.

11. Thermoformbare Einlage (1) basierend auf Verstärkungsfasern nach einem der Ansprüche 1 bis 10, **dadurch gekennzeichnet, dass** sie als kontinuierliches Endlosband auf einer Bobine ausgebildet ist.

12. Verfahren zur Herstellung einer thermoformbaren Einlage (1) nach einem der Ansprüche 1 bis 11, umfassend die Schritte:
a) auf einem Träger, Aufbringen eines ersten Gewebes (3), das aus Verbindungsfasern (3a) gefertigt ist
b) Aufbringen, auf das erste Gewebe (3) von Verstärkungsfasern (2a) und Granulat (2b) aus einem zweiten thermoreaktivierbaren Material, was eine Zwischenschicht (2) bildet,
c) Aufbringen, auf der Zwischenschicht (2), eines zweiten Gewebes (4), das aus Verbindungsfasern (4a) gefertigt ist,
d) Durchführen einer Vernadelung, damit die Abschnitte von Verbindungsfasern (3b, 4b) des ersten und zweiten Gewebes (3, 4) in die Zwischenschicht (2) eindringen,
e) Aufheizen des Aufbaus auf eine ausreichende Temperatur, um die Verbindungsfasern (3a, 4a, 3b, 4b) aufzuweichen und adhäsiv zu machen,
f) Kaltwalzen des Aufbaus.

13. Anwendung einer thermoformbaren Einlage (1) nach einem der Ansprüche 1 bis 11, bei der Herstellung von Teilen durch Thermoformen der Einlage.

## Claims

1. Thermoformable lap (1) based on reinforcement fibers linked to a thermoreactivatable material, comprising:
- a first outer layer and a second outer layer, having a first thermoreactivatable material with a first reactivation temperature,
- an intermediate layer (2) arranged between the first and second outer layers,
- the intermediate layer (2) having reinforcement fibers (2a) and a second thermoreactivatable material with a second reactivation temperature higher than the first reactivation temperature,
**characterized in that**:
- the second thermoreactivatable material is in the form of granules (2b),
- the outer layers consist of a first web (3) and a second web (4) made of linking fibers (3a, 4a), of which at least the surface is made of the first thermoreactivatable material having a first reactivation temperature,
- at least certain sections (3b, 4b) of linking fibers of the first and second webs (3, 4) penetrate into the intermediate layer (2) and partially adhere to one another and to the reinforcement fibers (2a) of the intermediate layer (2).

2. Thermoformable lap (1) based on reinforcement fibers (2a) as claimed in claim 1, **characterized in that** the reinforcement fibers (2a) are glass fibers.

3. Thermoformable lap (1) based on reinforcement fibers as claimed in either of claims 1 and 2, **characterized in that** the first thermoreactivatable material is a polyamide/copolyamide (PA6/CoPA), a polyethylene, a copolypropylene, an acrylic or ethyl vinyl acetate.

4. Thermoformable lap (1) based on reinforcement fibers as claimed in any one of claims 1 to 3, **characterized in that** the linking fibers (3a, 4a) consist of a single first thermoreactivatable material.

5. Thermoformable lap (1) based on reinforcement fibers as claimed in any one of claims 1 to 3, **characterized in that** the linking fibers (3a, 4a) consist of a central core of polyamide, polyester or polypropylene and an outer sheath made of a first thermoreactivatable material with a first reactivation temperature that is lower than that of the central core.

6. Thermoformable lap (1) based on reinforcement fibers as claimed in any one of claims 1 to 5, **characterized in that** the second thermoreactivatable material in granules (2b) is a polyamide.

7. Thermoformable lap (1) based on reinforcement fibers as claimed in any one of claims 1 to 6, **characterized in that** the linking fibers (3a, 4a) are fiber sections.

8. Thermoformable lap (1) based on reinforcement fibers as claimed in any one of claims 1 to 7, **characterized in that**, in the intermediate layer (2), the reinforcement fibers (2a) are sections of reinforcement fibers (2a) mixed with the granules (2b) of second thermoreactivatable material.

9. Thermoformable lap (1) based on reinforcement fibers as claimed in any one of claims 1 to 7, **characterized in that** the intermediate layer (2) is laminated in layers of reinforcement fibers (20a, 20b, 20c) and layers of granules of second thermoreactivatable material (20d, 20e).

10. Thermoformable lap (1) based on reinforcement fibers as claimed in any one of claims 1 to 9, **characterized in that** it contains from 200 to 1 000 grams per square meter of reinforcement fibers (2a), and from 200 to 1 000 grams per square meter of granules (2b) of second thermoreactivatable material.

11. Thermoformable lap (1) based on reinforcement fibers as claimed in any one of claims 1 to 10, **characterized in that** it is in the form of a reelpackaged continuous strip.

12. Method for manufacturing a thermoformable lap (1) as claimed in any one of claims 1 to 11, comprising the steps of:
a) on a support, depositing a first web (3) made of linking fibers (3a),
b) depositing, on the first web (3), reinforcement fibers (2a) and granules (2b) of second thermoreactivatable material, forming an intermediate layer (2),
c) depositing, on the intermediate layer (2), a second web (4) made of linking fibers (4a),
d) performing a needling to make the sections of linking fibers (3b, 4b) of the first and second webs (3, 4) penetrate into the intermediate layer (2),
e) heating the assembly to a sufficient temperature to soften the linking fibers (3a, 4a, 3b, 4b) and render them adhesive,
f) cold calendering the assembly.

13. Application of a thermoformable lap (1) as claimed in any one of claims 1 to 11 to the production of parts by thermoforming the lap.
